# EUROPEAN PATENT APPLICATION

(11) **EP 2 775 384 A2**
(43) Date of publication of application: **10.09.2014**
(21) Application number: 14154652.3
(22) Date of filing: 11.02.2014
(51) Int. Cl.: G06F 3/0488, G06F 3/041

(54) **Electronic apparatus having software keyboard function and method of controlling electronic apparatus having software keyboard function**

(30) Priority: 04.03.2013 JP 2013042391
(71) Applicant: Funai Electric Co., Ltd., Daito-shi, Osaka 574-0013 (JP)
(72) Inventor: Hashimoto, Masahiro, Daito-shi, Osaka 574-0013 (JP)
(74) Representative: Grünecker, Kinkeldey, Stockmair & Schwanhäusser

(57) **Abstract**

This electronic apparatus (100) having a software keyboard function includes a detection portion (2) capable of detecting a key input position (P) of an input operation performed by the user and a control portion (3) performing control of changing a key determination range (21, 21a, 21b, 22-26) on the basis of at least either a correction operation performed on a prescribed key input or an input frequency of the prescribed key input.

## Description

### BACKGROUND OF THE INVENTION

### Field of the Invention

The present invention relates to an electronic apparatus having a software keyboard function and a method of controlling an electronic apparatus having a software keyboard function.

### Description of the Background Art

An electronic apparatus including a detection portion capable of detecting a key input position of an input operation performed by the user on the basis of a displayed key display area is known in general, as disclosed in Japanese Patent Laying-Open No. 2012-014500, for example.

The aforementioned Japanese Patent Laying-Open No. 2012-014500 discloses an electronic apparatus including a display, a projection type capacitance touch panel (detection portion) arranged on a display surface of the display for detecting a touch operation of the user, a CPU converting input coordinates on the touch panel to display coordinates on the display and a memory for storing a normal capacitance distribution pattern (normal pattern) on the touch panel. This electronic apparatus is configured to perform calibration so that a capacitance distribution pattern actually measured on the touch panel and the normal pattern coincide with each other. The electronic apparatus is conceivably so configured that a key input (character input, for example) corresponding to a key determination range where an input position is located is performed on the basis of the input position of the touch panel touched by the user.

When having touched a false position of the touch panel (having made an input error) in the electronic apparatus described in the aforementioned Japanese Patent Laying-Open No. 2012-014500, however, the user must perform a correction operation of canceling the false input and newly touching the touch panel. In particular, a key input having a high input frequency exhibits a high possibility of input errors, and the number of correction operations resulting from input errors of the user is conceivably disadvantageously increased.

### SUMMARY OF THE INVENTION

The present invention has been proposed in order to solve the aforementioned problems, and an object thereof is to provide an electronic apparatus having a software keyboard function and a method of controlling an electronic apparatus having a software keyboard function each capable of suppressing increase in the number of correction operations by preventing the user from making input errors.

An electronic apparatus having a software keyboard function according to a first aspect of the present invention includes a display portion capable of displaying a software keyboard screen including a key display area, a detection portion capable of detecting a key input position of an input operation performed by the user on the basis of the displayed key display area and a control portion recognizing that a prescribed key input has been performed on the basis of a prescribed key determination range where the key input position detected by the detection portion is located, while the control portion is configured to perform control of changing the key determination range on the basis of at least either a correction operation performed on the prescribed key input or an input frequency of the prescribed key input.

In the electronic apparatus having a software keyboard function according to the first aspect of the present invention, as hereinabove described, the control portion performs the control of changing the key determination range on the basis of the correction operation performed on the prescribed key input so that the same can change the key determination range correspondingly to an input error made by the user itself, whereby the electronic apparatus can prevent the user from making further input errors. Further, the control portion performs the control of changing the key determination range on the basis of the input frequency of the prescribed key input so that the same can allow the user to easily perform a key input having a high input frequency by enlarging a key determination range corresponding to the key input having a high input frequency or moving the same to a position allowing the user to easily perform the input operation, for example, whereby the electronic apparatus can prevent the user from making further input errors in the key input having a high input frequency. Consequently, the electronic apparatus can suppress increase in the number of correction operations.

In the aforementioned electronic apparatus having a software keyboard function according to the first aspect, the control portion is preferably configured to perform the control of changing the key determination range on the basis of at least either a history of the correction operation performed on the prescribed key input or an input frequency acquired through a history of the prescribed key input. According to this structure, the control portion reflects the user's habit in the input operation on the control of changing the key determination range on the basis of the history, whereby the electronic apparatus can further suppress increase in the number of correction operations. Further, the control portion can perform the control of changing the key determination range by easily acquiring the input frequency from the history, whereby the electronic apparatus can easily prevent the user from making further input errors in the key input having a high input frequency.

In the aforementioned electronic apparatus having a software keyboard function according to the first aspect, the key input is preferably a character input, and the control portion is preferably configured to determine whether or not a correction operation for a second character input resulting from a false determination of a first character input has been performed by determining whether or not the input operation performed by the user at the time of the first character input has intended not the first character input but the second character input when the user has canceled the first character input after performing the first character input and then performed the second character input substituting for the first character input, and preferably configured to perform control of at least changing a key determination range for determining the second character input when determining that the correction operation resulting from the false determination has been performed. According to this structure, the control portion can reliably determine whether or not the correction operation for the second character input resulting from the false determination of the first character input has been performed by determining whether or not the input operation performed by the user at the time of the first character input has intended not the first character input but the second character input. Further, the control portion can allow the user to easily perform the second character input subjected to the correction operation by at least changing the key determination range for determining the second character input when determining that the correction operation for the second character input resulting from the false determination of the first character input has been performed, whereby the electronic apparatus can reliably suppress increase in the number of correction operations.

In this case, the control portion is preferably configured to determine that the correction operation resulting from the false determination has been performed when a key determination range for determining the first character input and the key determination range for determining the second character input are adjacent to each other. According to this structure, the control portion can recognize a correction operation between adjacent key determination ranges causing the user to easily make an input error as a correction operation resulting from a false determination, whereby the same can more reliably recognize that the correction operation resulting from the false determination has been performed.

In the aforementioned electronic apparatus including the control portion determining that the correction operation resulting from the false determination has been performed when the key determination range for determining the first character input and the key determination range for determining the second character input are adjacent to each other, the control portion is preferably configured to determine that the correction operation resulting from the false determination has been performed when the user canceled a first character input of at least two English characters after performing the first character input of at least two English characters and the key determination range for determining the first character input and the key determination range for determining the second character input are adjacent to each other. According to this structure, the control portion can recognize only a correction operation between adjacent key determination ranges causing the user to easily make an input error as the correction operation resulting from the false determination.

In the aforementioned structure in which the key input is a character input, the control portion is preferably configured to perform control of changing the key determination range for determining the second character input on the basis of the key input position detected at the time of the first character input by a prescribed plural number of times when the number of times of determining that the correction operation resulting from the false determination has been performed reaches the prescribed plural number of times on the basis of a history of a correction operation performed on the first key input. According to this structure, the control portion can suppress change of the key determination range when the user has made an input error in a key input actually exhibiting a low possibility of errors, whereby the electronic apparatus can prevent the user from difficulty in the input operation.

In the aforementioned structure in which the key input is a character input, the control portion is preferably configured to perform control of changing the key determination range for determining the second character input so that the key input position detected at the time of the first character input is included in the key determination range for determining the second character input when determining that the correction operation resulting from the false determination has been performed. According to this structure, the control portion can effectively allow the user, having performed an input operation while falsely regarding the key input position of the canceled first character input as within the key determination range for determining the second character input, to easily perform the input operation.

In this case, the control portion is preferably configured to perform control of changing the key determination range for determining the second character input so that the key input position detected at the time of the first character input is included in the key determination range for determining the second character input and to change a key display area for the second key input to correspond to the changed key determination range for determining the second character input when determining that the correction operation resulting from the false determination has been performed. According to this structure, the user can visually recognize the changed content of the key determination range for determining the second character input through the key display area for the second character input.

In the aforementioned structure in which the key input is a character input, the control portion is preferably configured to perform control of moving the whole of a plurality of key determination ranges and not to move a plurality of key display areas of the software keyboard screen when determining that the correction operation resulting from the false determination has been performed. According to this structure, the control portion can allow the user, having performed the input operation on a position of the software keyboard screen deviating in a prescribed direction as a whole, to easily perform the input operation on the whole of the character input by moving only the whole of the plurality of key determination ranges without moving the key display areas.

In the aforementioned structure in which the key input is a character input, the control portion is preferably configured to perform control of enlarging the key determination range for determining the second character input while reducing a key determination range for determining the first key input when determining that the correction operation resulting from the false determination has been performed. According to this structure, the control portion can reduce the key determination range for determining the first character input having been falsely performed while enlarging the key determination range for determining the second character input having been unperformable at the time of the first character input, whereby the same can effectively allow the user to easily perform the input operation.

In the aforementioned structure of enlarging the key determination range for determining the second character input, the control portion is preferably configured to perform the control of enlarging the key determination range for determining the second character input while enlargedly displaying a key display area of the software keyboard screen corresponding to the second character input to correspond to the enlarged key determination range for determining the second character input. According to this structure, the control portion not only enlarges the key determination range for determining the second character input but also enlargedly displays the key display area corresponding to the second character input, whereby the same can more effectively allow the user to easily perform the input operation.

In the aforementioned structure of enlarging the key determination range for determining the second character input while reducing the key determination range for determining the first character input, the control portion is preferably configured to perform control of diminishing the rate of reducing the key determination range for determining the first key input range below the rate of enlarging the key determination range for determining the second character input when determining that the correction operation resulting from the false determination has been performed. According to this structure, the control portion can prevent the key determination range for determining the first character input from excess reduction, whereby the same can prevent the user from difficulty in the input operation for the first character input as well as from difficulty in visual recognition of the key display area for the first character input.

In the aforementioned electronic apparatus having a software keyboard function according to the first aspect, the control portion is preferably configured to perform control of enlarging a key determination range for determining the prescribed key input or changing the arrangement of the key determination range when the input frequency of the prescribed key input reaches a prescribed level. According to this structure, the control portion can allow the user to easily perform the prescribed key input having a high input frequency by enlarging the key determination range for determining the prescribed key input when the input frequency of the prescribed key input is higher than the prescribed level. When the input frequency of the prescribed key input is higher than the prescribed level, further, the control portion can change the arrangement of the key determination range so that the key determination range for determining the key input having a high input frequency is located on a position allowing the user to more easily perform the input operation, whereby the same can prevent the user from making an input error. Thus, the electronic apparatus can suppress increase in the number of correction operations.

In this case, the control portion is preferably configured to perform control of interchanging the key determination range and a key display area for determining the prescribed key input with a key determination range and a key display area for determining another key input different from the prescribed key input when the input frequency of the prescribed key input reaches the prescribed level. According to this structure, the control portion can interchange the key determination range for determining the prescribed key input having a high input frequency with the key determination range for determining another key input different from the prescribed key input having a high input frequency so that the key determination range for determining the prescribed key input having a high input frequency is located on a position allowing the user to more easily perform the input operation. Consequently, the electronic apparatus can further suppress increase in the number of correction operations.

A method of controlling an electronic apparatus having a software keyboard function according to a second aspect of the present invention is a method of controlling an electronic apparatus having a software keyboard function and including a display portion capable of displaying a software keyboard screen including a key display area and a detection portion capable of detecting a key input position of an input operation performed by the user on the basis of the displayed key display area, and includes steps of recognizing that a prescribed key input has been performed on the basis of a prescribed key determination range where the key input position detected by the detection portion is located and changing the key determination range on the basis of at least either a correction operation performed on the prescribed key input or an input frequency of the prescribed key input.

As hereinabove described, the method of controlling an electronic apparatus having a software keyboard function according to the second aspect of the present invention includes the step of changing the key determination range on the basis of the correction operation performed on the prescribed key input so that the key determination range can be changed correspondingly to an input error made by the user itself, whereby the user can be prevented from making further input errors. Further, the method includes the step of changing the key determination range on the basis of the input frequency of the prescribed key input so that the user can be allowed to easily perform a key input having a high input frequency by enlarging a key determination range corresponding to the key input having a high input frequency or moving the same to a position allowing the user to easily perform the input operation, for example, whereby the user can be prevented from making further input errors in the key input having a high input frequency. Consequently, increase in the number of correction operations can be suppressed.

According to the present invention, as hereinabove described, increase in the number of correction operations can be suppressed by preventing the user from making an input error.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing the structure of a portable electronic apparatus 100 according to a first embodiment of the present invention;
Fig. 2 is a plan view showing the portable electronic apparatus 100 according to the first embodiment of the present invention;
Fig. 3 is an enlarged plan view of a software keyboard screen of the portable electronic apparatus 100 according to the first embodiment of the present invention;
Fig. 4 is a diagram for illustrating correction of an English character in the portable electronic apparatus 100 according to the first embodiment of the present invention;
Fig. 5 is a diagram for illustrating correction of two English characters in the portable electronic apparatus 100 according to the first embodiment of the present invention;
Fig. 6 is a diagram for illustrating correction of at least three English characters in the portable electronic apparatus 100 according to the first embodiment of the present invention;
Fig. 7 is an enlarged plan view showing a state of moving the whole of key determination ranges in the portable electronic apparatus 100 according to the first embodiment of the present invention;
Fig. 8 is a diagram showing a state of enlarging a key determination range and a key display area for a character input "G(g)" in the portable electronic apparatus 100 according to the first embodiment of the present invention;
Fig. 9 is a flow chart showing a control processing flow in a CPU 3 of the portable electronic apparatus 100 according to the first embodiment of the present invention;
Fig. 10 is a diagram showing a state of enlarging a key determination range and a key display area for a character input "G(g)" in a portable electronic apparatus according to a second embodiment of the present invention;
Fig. 11 is a diagram showing a state of interchanging characters "B" and "G" with each other in a portable electronic apparatus according to a third embodiment of the present invention; and
Fig. 12 is a diagram showing a state of enlarging a key determination range and a key display area for a character input "G(g)" in a portable electronic apparatus according to a modification of the present invention.

### DESCRIPTION OF THE PREFERRED EMBODIMENTS

Embodiments of the present invention are now described with reference to the drawings.

### (First Embodiment)

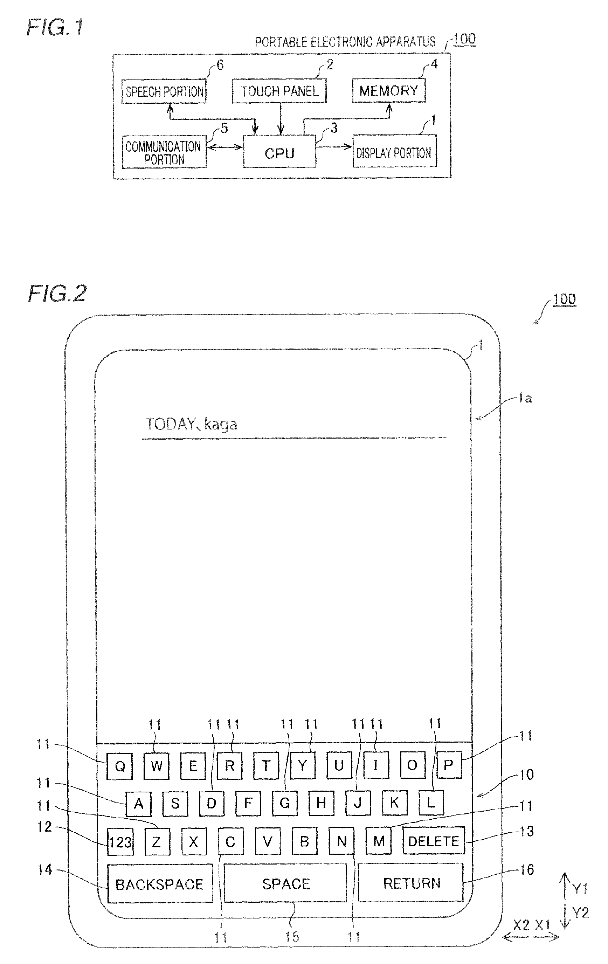

First, the structure of a portable electronic apparatus 100 according to a first embodiment of the present invention is described with reference to Figs. 1 to 8. The portable electronic apparatus 100 is an example of the "electronic apparatus having a software keyboard function" in the present invention.

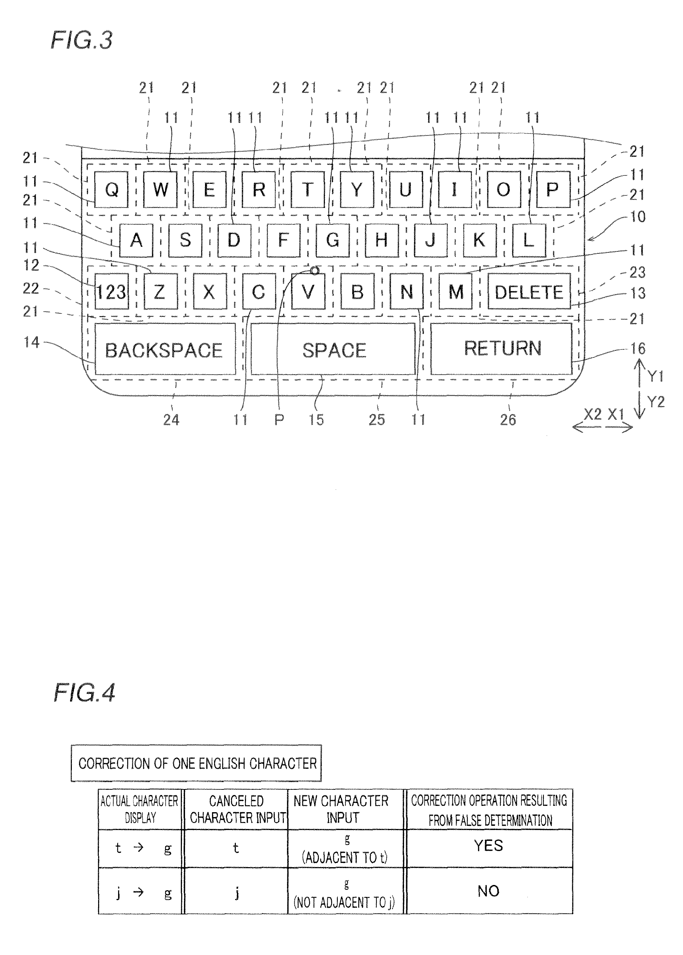

As shown in Fig. 1, the portable electronic apparatus 100 according to the first embodiment of the present invention includes a display portion 1 and a touch panel 2 arranged on the display portion 1 and capable of detecting a key input position P (see Fig. 3) at the time of an input operation (touch operation) performed by the user. The portable electronic apparatus 100 further includes a CPU 3 controlling the whole of the portable electronic apparatus 100, a memory 4 capable of storing information etc. on the basis of instructions issued by the CPU 3, as well as a communication portion 5 and a speech portion 6 for making communication and speech communication with another portable electronic apparatus or the like. The touch panel 2 is an example of the "detection portion" in the present invention, and the CPU 3 is an example of the "control portion" in the present invention.

As shown in Fig. 2, the display portion 1 is configured to be capable of displaying a software keyboard screen 10 displaying a keyboard as an image and a character display screen 1a displaying characters input through the software keyboard screen 10 as a horizontal character string. As shown in Fig. 3, the software keyboard screen 10 displays a plurality of character key display areas 11, a switch key display area 12 and a delete key display area 13 provided on the upper side (along arrow Y1) thereof and a backspace key display area 14, a space key display area 15 and a return key display area 16 provided on the lower side (along arrow Y2) thereof in a state separated from each other. The character key display areas 11, the switch key display area 12, the delete key display area 13, the backspace key display area 14, the space key display area 15 and the return key display area 16 are examples of the "key display area" in the present invention.

The software keyboard screen 10 displays 26 character key display areas 11, to correspond to the 26 alphabetic characters from A to Z respectively. The character key display areas 11 are arrayed according to the so-called QWERTY arrangement. The switch key display area 12 displays a numeric string "123". The delete key display area 13, the backspace key display area 14, the space key display area 15 and the return key display areas 16 display character strings "DELETE", "BACKSPACE", "SPACE" and "RETURN" respectively.

The CPU 3 (see Fig. 1) recognizes the touch panel 2 in a state divided into key determination ranges 21 to 26 along broken lines shown in Fig. 3. Further, the CPU 3 recognizes 26 key determination ranges 21 from A to Z correspondingly to the 26 character key display areas 11 from A to Z respectively. In addition, the CPU 3 recognizes the key determination ranges 22 to 26 correspondingly to the switch key display area 12, the delete key display area 13, the backspace key display area 14, the space key display area 15 and the return key display area 16 respectively. The CPU 3 is configured to perform a key input (character input, for example) indicated by a corresponding one of the key display areas 11 to 16 on the basis of any of the key determination ranges 21 to 26 where the key input position P detected on the touch panel 2 is located. In other words, the portable electronic apparatus 100 is configured to have a software keyboard function.

As shown in Fig. 3, the key determination ranges 21 to 26 are adjacent to each other, and formed to be larger than the corresponding key display areas 11 to 16 respectively. In the state shown in Fig. 3 precedent to first key determination range change processing described later, the CPU 3 recognizes the key display areas 11 to 16 and the corresponding key determination ranges 21 to 26 so that the centers thereof substantially coincide with each other respectively.

The memory 4 (see Fig. 1) stores various programs for driving the CPU 3. The memory 4 also stores adjacent information related to the adjacent key determination ranges 21 to 26 for the respective ones of the key determination ranges 21 to 26. For example, adjacent information of the key determination range 21 for determining a character input "G(g)" indicates that the key determination ranges 21 for determining character inputs "F(f)", "T(t)", "Y(y)", "H(h)", "B(b)" and "V(v)" are adjacent thereto, as shown in Figs. 2 and 3.

The memory 4 is configured to store character codes related to input characters (alphabetic characters) as a character buffer. The memory 4 stores the character codes as the character buffer in order of the character inputs, and is configured not to erase but to continuously store the characters in the character buffer even if the user performs an operation of erasing any character input to delete the corresponding character from the character display screen 1a (see Fig. 2).

The memory 4 further stores position coordinates of the key input position P detected on the touch panel 2 (see Fig. 1) at the time of each character input and the number of times of the character input correspondingly to the character buffer. The CPU 3 controls the memory 4 to store the position coordinates of the key input position P (see Fig. 3) and the number of times of each character input every time the same determines that the character input has been performed. Further, the CPU 3 controls the memory 4 to store the number of times of a correction operation for a new character input every time the same determines that a correction operation described later has been performed.

According to the first embodiment, the CPU 3 (see Fig. 1) is configured to determine whether or not a correction operation for a new character input resulting from a false determination of a canceled character input has been performed by determining whether or not an input operation performed by the user at the time of the canceled character input has intended not the canceled character input but the new character input when the user has cancelled a character input after performing the character input and then performed the new character input substituting for the canceled character input. The CPU 3 compares a canceled character string and a new character string with each other, and retrieves the presence or absence of similar character strings. When similar character strings are present, the CPU 3 determines whether or not the user has performed the new character input substituting for the canceled character input by comparing characters with each other in a state decomposing the character strings into the respective characters. The canceled character input is an example of the "first character input" or the "key input" in the present invention, and the new character input is an example of the "second character input" or the "key input" in the present invention.

The CPU 3 is configured to determine that the correction operation for the new character input resulting from the false determination of the canceled character input has been performed by determining that the input operation performed by the user at the time of the canceled character input has intended not the canceled character input but the new character input when the key determination range 21 (see Fig. 3) for determining the canceled character input and the key determination range 21 (see Fig. 3) for determining the new character input are adjacent to each other.

When the user has canceled a character input "t" after performing the character input "t" and then newly performed another character input "g" as correction of an English character shown in Fig. 4, for example, the CPU 3 (see Fig. 1) first determines that the user has newly performed the character input "g" on a character position where "t" had been located on the basis of the character buffer stored in the memory 4 (see Fig. 1). Then, the CPU 3 determines whether or not the key determination range 21 (see Fig. 3) for determining the character input "t" and the key determination range 21 (see Fig. 3) for determining the character input "g" are adjacent to each other on the basis of the corresponding adjacent information stored in the memory 4. The key determination range 21 for determining the character input "t" and the key determination range 21 for determining the character input "g" are adjacent to each other as shown in Figs. 2 and 3, and hence the CPU 3 determines that the correction operation resulting from the false determination has been performed by determining that the input operation performed by the user at the time of the canceled character input "t" has intended not the canceled character input "t" but the new character input "g".

When the user has canceled a character input "j" after performing the character input "j" and then newly performed a character input "g" on a character position where "j" had been located as shown in Fig. 4, on the other hand, the key determination range 21 for determining the character input "j" and the key determination range 21 for determining the character input "g" are not adjacent to each other, as shown in Figs. 2 and 3. Therefore, the CPU 3 determines that the input operation performed by the user at the time of the canceled character input "j" has not intended the character input "g" and no correction operation resulting from a false determination has been performed.

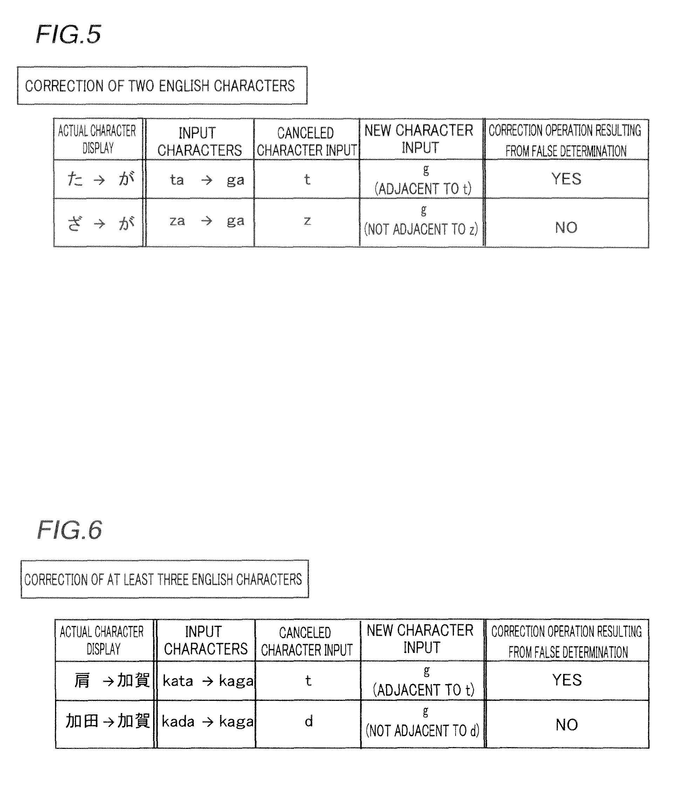

When the user has canceled a character input " 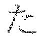 " (character inputs "t" and "a") after performing the character inputs "t" and "a" and converting the same to the hiragana " 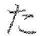 " and then newly performed character inputs "g" and "a" as correction of two English characters shown in Fig. 5, the CPU 3 determines that the character input "g" has been newly performed on the character position where "t" had been located on the basis of the character buffer stored in the memory 4. The key determination range 21 for determining the character input "t" and the key determination range 21 for determining the character input "g" are adjacent to each other, and hence the CPU 3 determines that a correction operation resulting from a false determination has been performed.

When the user has canceled a character input " 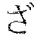 " (character inputs "z" and "a") after performing the character inputs "z" and "a" and converting the same to the hiragana " 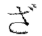 " and then newly performed character inputs "g" and "a", on the other hand, the CPU 3 determines that the character input "g" has been newly performed on a character position where the character "z" had been located on the basis of the character buffer stored in the memory 4. The key determination range 21 for determining the character input "z" and the key determination range 21 for determining the character input "g" are not adjacent to each other, and hence the CPU 3 determines that no correction operation resulting from a false determination has been performed.

Also when the user has canceled a character input 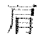 " (kata)" and performed a character input " 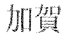 (kaga)" as correction of at least three English characters shown in Fig. 6, the CPU 3 determines that the character input "g" has been newly performed on the character position where "t" had been located on the basis of the character buffer stored in the memory 4, similarly to the aforementioned correction of two English characters. The key determination range 21 for determining the character input "t" and the key determination range 21 for determining the character input "g" are adjacent to each other, and hence the CPU 3 determines that a correction operation resulting from a false determination has been performed.

When the user has canceled a character input " 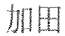 (kada)" and performed the character input " 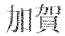 (kaga)", on the other hand, the CPU 3 determines that the character input "g" has been newly performed on a character position where "d" had been located on the basis of the character buffer stored in the memory 4. The key determination range 21 for determining the character input "d" and the key determination range 21 for determining the character input "g" are not adjacent to each other, and hence the CPU 3 determines that no correction operation resulting from a false determination has been performed.

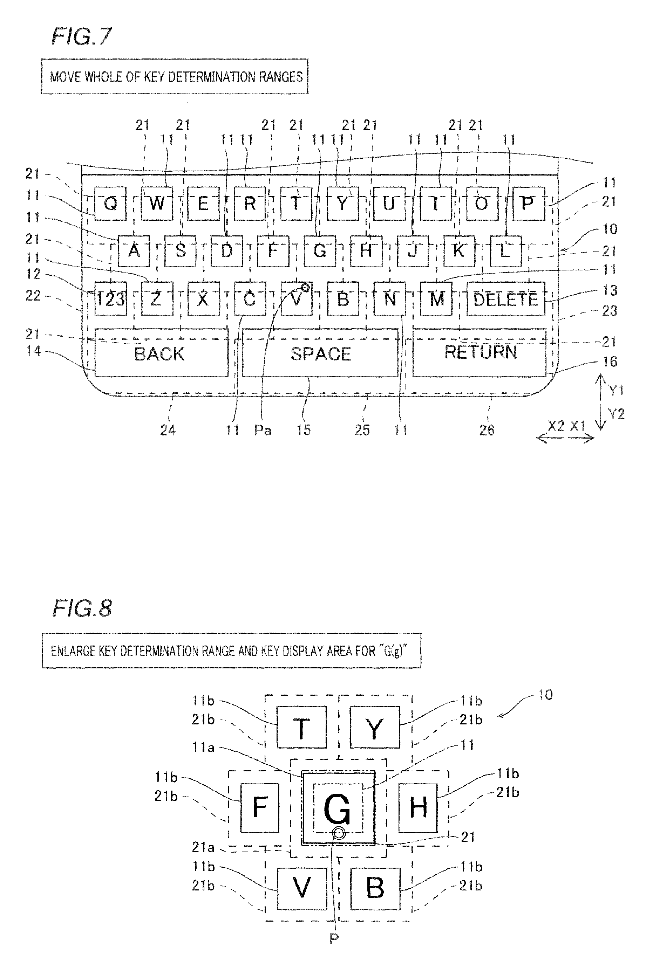

According to the first embodiment, the CPU 3 (see Fig. 1) is configured to perform the first key determination range change processing of moving the whole of the key determination ranges 21 to 26 as shown in Fig. 7 on the basis of the key input position P (see Fig. 3) by a prescribed number of times of the canceled character input when the number of times of a correction operation for the new character input reaches a prescribed level on the basis of a history of the correction operation stored in the memory 4 (see Fig. 1). More specifically, the CPU 3 is configured to calculate position coordinates of a barycentric position Pa located on the barycenter of the key input position P from position coordinates of the key input position P by the prescribed number of times of the canceled character input and to move the whole of the key determination ranges 21 to 26 so that the calculated barycentric position Pa is included in the key determination range 21 for determining the new character input.

When the number of times of the correction operation for the character input "g" reaches the prescribed level (10 times, for example), for example, the CPU 3 calculates position coordinates of a barycentric position Pa located on an upper right position of the character key display area 11 corresponding to "V(v)" from the position coordinates of the key input position P detected on the touch panel 2 at the time of the canceled character input by the prescribed number of times. Then, the CPU 3 moves the whole of the key determination ranges 21 to 26 downward (along arrow Y2), so that the barycentric position Pa is included in the key determination range 21 for determining the character input "G(g)".

The CPU 3 is configured to move the whole of the key determination ranges 21 to 26 and not to move the whole of the key display areas 11 to 16 of the software keyboard screen 10 when performing the first key determination range change processing based on a correction operation. Thus, the CPU 3 recognizes the key display areas 11 to 16 and the corresponding key determination ranges 21 to 26 in a state where the centers thereof deviate from each other respectively after the first key determination range change processing.

According to the first embodiment, the CPU 3 is configured to perform second key determination range change processing of enlarging a key determination range 21 for determining a prescribed character input (converting the same to an enlarged key determination range 21a) in a state of fixing the aspect ratio thereof and reducing the key determination ranges 21 adjacent to the enlarged key determination range 21a (converting the same to reduced key determination ranges 21b) as shown in Fig. 8 when the input frequency of the prescribed character input reaches a prescribed level on the basis of the number (history) of times of character inputs for the respective characters stored in the memory 4 and the number of times of the whole character inputs. The enlarged key determination range 21a and the reduced key determination ranges 21b are examples of the "key determination range" in the present invention.

At this time, the CPU 3 enlargedly displays the character key display area 11 corresponding to the enlarged key determination range 21a for the prescribed character input (converts the same to an enlarged key display area 11a) in a state of fixing the aspect ratio thereof, to correspond to the enlarged key determination range 21a. Further, the CPU 3 reducedly displays the character key display areas 11 corresponding to the reduced key determination ranges 21b (converts the same to reduced key display areas 11b) correspondingly to the reduced key determination ranges 21b. The enlarged key display area 11a and the reduced key display areas 11b are examples of the "key display area" in the present invention.

For example, the CPU 3 enlarges an enlarged key determination range 21a for determining the character input "G(g)" and reduces reduced key determination ranges 21b for determining the character inputs "F(f)", "T(t)", "Y(y)", "H(h)", "B(b)" and "V(v)" when the input frequency of the character input "G(g)" reaches a prescribed level (10 %, for example). Further, the CPU 3 enlargedly displays an enlarged key display area 11a corresponding to "G(g)" and reducedly displays reduced key display areas 11b corresponding to "F(f)", "T(t)", "Y(y)", "H(h)", "B(b)" and "V(v)".

The CPU 3 is configured not to reduce the reduced key determination ranges 21b and the reduced key display areas 11b to less than about 2/3 times of the unreduced key determination ranges 21 and the unreduced character key display areas 11 respectively. Thus, the CPU 3 can prevent the reduced key determination ranges 21b and the reduced key display areas 11b from excess reduction, whereby the same can prevent the user from difficulty in input operations of the reduced key determination ranges 21b as well as from difficulty in visual recognition of the reduced key display areas 11b. Further, the CPU 3 is configured not to enlarge the enlarged key determination range 21a and the enlarged key display area 11a in excess of about twice the unenlarged key determination range 21 and the unenlarged key display area 11 respectively.

A control processing flow in the CPU 3 of the portable electronic apparatus 100 is now described with reference to Figs. 1, 3 and 7 to 9.

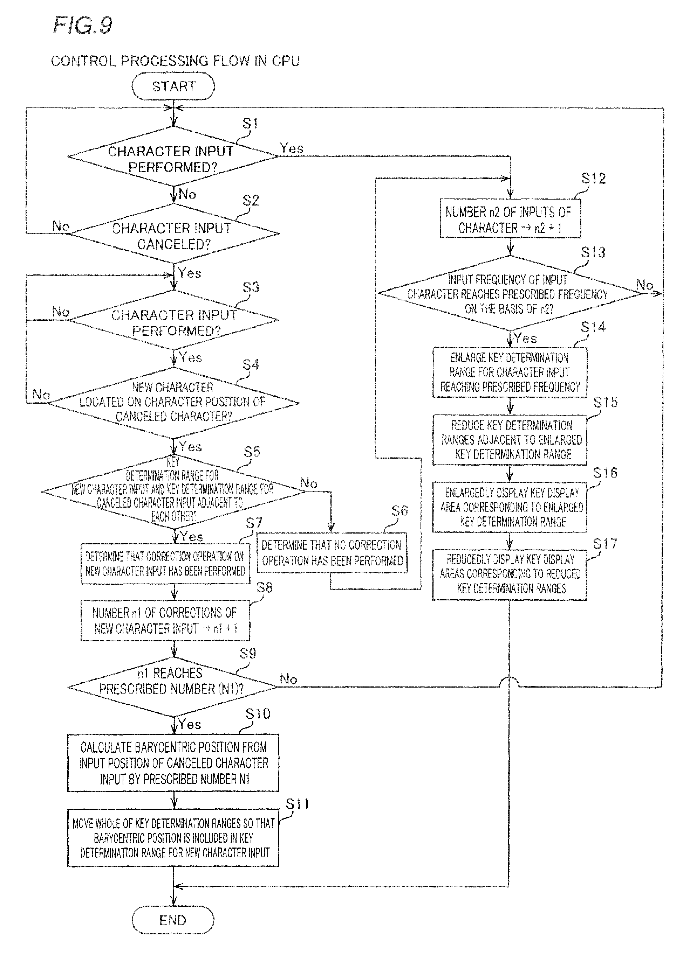

First, the CPU 3 determines whether or not a character input has been performed by determining whether or not the key input position P (see Fig. 3) detected on the touch panel 2 (see Fig. 1) is located within a key determination range 21 (see Fig. 3) corresponding to any one of the character key display areas 11 at a step S1, as shown in Fig. 9.

When determining that no character input has been performed, the CPU 3 determines whether or not a character input has been canceled by determining whether or not the key input position P is located within a key determination range 23 (see Fig. 3) corresponding to the delete key display area 13 or a key determination range 24 (see Fig. 3) corresponding to the backspace key display area 14 at a step S2. When determining that the character input has not been canceled, the CPU 3 returns to the step S1.

When determining that the character input has been canceled, the CPU 3 determines whether or not a new character input has been performed at a step S3, and repeats this determination until the same determines that the new character input has been performed. When determining that the new character input has been performed, the CPU 3 determines whether or not a character based on the new character input is located on a character position of a character based on the canceled character input on the basis of the character buffer stored in the memory 4 (see Fig. 1) at a step S4. When determining that no new character is located on the character position of the canceled character input, the CPU 3 returns to the step S3.

In the control processing flow according to the first embodiment, the CPU 3 determines whether or not the canceled character input and the new character input correspond to a correction operation resulting from a false determination when determining that the new character is located on the character position of the canceled character input. More specifically, the CPU 3 determines whether or not the key determination range 21 for determining the new character input and the key determination range 21 for determining the canceled character input are adjacent to each other on the basis of the adjacent information stored in the memory 4 at a step S5. When determining that the key determination ranges 21 are not adjacent to each other, the CPU 3 determines that the input operation performed by the user at the time of the canceled character input has not intended the new character input and no correction operation resulting from a false determination has been performed at a step S6. Then, the CPU 3 advances to a step S12. When determining that the key determination ranges 21 are adjacent to each other, on the other hand, the CPU 3 determines that the input operation performed by the user at the time of the canceled character input has intended the new character input and a correction operation for the new character input resulting from a false determination of the canceled character input has been performed at a step S7.

At a step S8, the CPU 8 adds 1 to a number n1 of times of a correction operation for the new character input and stores the result in the memory 4. Thereafter the CPU 3 determines whether or not the number n1 of times of the correction operation for the new character input reaches a prescribed number (N1) at a step S9. When determining that the number n1 is less than the number N1, the CPU 3 returns to the step S1.

In the control processing flow according to the first embodiment, the CPU 3 performs the first key determination range change processing based on a correction operation when determining that the number n1 reaches the number N1. More specifically, the CPU 3 calculates the position coordinates of the barycentric position Pa (see Fig. 7) from the position coordinates of the key input position P detected on the touch panel 2 at the time of the canceled character input by the prescribed number (N1) at a step S10. At a step S11, the CPU 3 moves the whole of the key determination ranges 21 to 26 so that the barycentric position Pa is included in the key determination range 21 for determining the new character input at a step S11, as shown in Fig. 7. Then, the CPU 3 terminates the control processing flow.

When determining that the character input has been performed at the step S1 or determining that no correction operation resulting from a false determination has been performed at the step S6, the CPU 3 adds 1 to a number n2 of times of the character input and stores the result in the memory 4 at the step S12. Then, the CPU 3 determines whether or not the input frequency of the input character reaches a prescribed level on the basis of the number n2 of times of the character input and the number of times of the whole character inputs at a step S13. When determining that the input frequency of the input character does not reach the prescribed level, the CPU 3 returns to the step S1.

In the control processing flow according to the first embodiment, the CPU 3 performs the second key determination range change processing based on the input frequency when determining that the input frequency of the input character reaches the prescribed level. More specifically, the CPU 3 enlarges the key determination range 21 for determining the prescribed character input having the input frequency reaching the prescribed level in the state of fixing the aspect ratio thereof at a step S14. Then, the CPU 3 reduces the key determination ranges 21 adjacent to the enlarged key determination range 21a at a step S15. Thereafter the CPU 3 enlargedly displays the character key display area 11 corresponding to the enlarged key determination range 21a (see Fig. 8) for the prescribed character input in the state of fixing the aspect ratio thereof to correspond to the enlarged key determination range 21a at a step S16. Finally, the CPU 3 reducedly displays the character key display areas 11 corresponding to the reduced key determination ranges 21b to correspond to the reduced key determination ranges 21b at a step S17. Then, the CPU 3 terminates the control processing flow.

According to the first embodiment, as hereinabove described, the CPU 3 is configured to perform the first key determination range change processing of moving the whole of the key determination ranges 21 to 26 on the basis of the history of the correction operation stored in the memory 4. Thus, the CPU 3 can move the whole of the key determination ranges 21 to 26 correspondingly to an input error made by the user itself, whereby the same can prevent the user from making further input errors. Further, the CPU 3 can reflect the user's habit in the input operation on the control of changing the key determination ranges 21 to 26 on the basis of the history of the correction operation, whereby the same can further suppress increase in the number of correction operations.

According to the first embodiment, the CPU 3 is configured to perform the second key determination range change processing of enlarging the key determination range 21 for determining the prescribed character input and reducing the key determination ranges 21 adjacent to the enlarged key determination range 21a on the basis of the number (history) of times of the character inputs for the respective characters stored in the memory 4 and the number of times of the whole character inputs. Thus, the CPU 3 can allow the user to easily perform a character input having a high input frequency by enlarging the enlarged key determination range 21a corresponding to the character input having a high input frequency, whereby the same can prevent the user from making further input errors in the key input having a high input frequency. Further, the CPU 3 can reflect the user's habit in the input operation on the control of changing the key determination ranges 21 to 26 on the basis of the history of the character input, whereby the same can easily suppress increase in the number correction operations. In addition, the CPU 3 can perform the control of changing the key determination ranges 21 to 26 by easily acquiring the input frequency from the history, whereby the same can easily prevent the user from making further input errors in the key input having a high input frequency.

According to the first embodiment, the CPU 3 is configured to determine whether or not the correction operation for the new character input resulting from the false determination of the canceled character input has been performed by determining whether or not the input operation performed by the user at the time of the canceled character input has intended not the canceled character input but the new character input when the user has canceled the input character after performing the character input and then performed the new character input substituting for the canceled character input. Thus, the CPU 3 can reliably determine whether or not the correction operation for the new character input resulting from the false determination of the canceled character input has been performed.

According to the first embodiment, the CPU 3 is configured to move the whole of the key determination ranges 21 to 26 including the key determination range 21 for determining the new character input when the number of times of the correction operation for the new character input reaches the prescribed level. Thus, the CPU 3 can allow the user to easily perform the new character input subjected to the correction operation, whereby the same can reliably suppress increase in the number of correction operations.

According to the first embodiment, the CPU 3 is configured to determine that the correction operation resulting from the false determination has been performed by determining that the input operation performed by the user at the time of the canceled character input has intended not the canceled character input but the new character input when the key determination range 21 for determining the canceled character input and the key determination range 21 for determining the new character input are adjacent to each other. Thus, the CPU 3 can recognize the correction operation between the adjacent key determination ranges 21 causing the user to easily make an input error as a correction operation resulting from a false determination, whereby the same can more reliably recognize that the correction operation resulting from the false determination has been performed.

According to the first embodiment, the CPU 3 is configured to determine that the correction operation resulting from the false determination has been performed when the user has canceled a character input of at least two English characters after performing the character input of at least two English characters and the key determination range 21 for determining the canceled character input and the key determination range 21 for determining the new character input are adjacent to each other. Thus, the CPU 3 can recognize only the correction operation between the adjacent key determination ranges 21 causing the user to easily make an input error as the correction operation resulting from the false determination.

According to the first embodiment, the CPU 3 is configured to move the whole of the key determination ranges 21 to 26 when the number of times of the correction operation for the new character input reaches the prescribed level on the basis of the history of the correction operation stored in the memory 4. Thus, the CPU 3 can be prevented from moving the whole of the key determination ranges 21 to 26 when the user has made an input error in a key input actually exhibiting a low possibility of errors, whereby the same can prevent the user from difficulty in the input operation.

According to the first embodiment, the CPU 3 is configured to calculate the position coordinates of the barycentric position Pa from the position coordinates of the key input position P detected on the touch panel 2 at the time of the canceled character input by the prescribed number of times and to move the whole of the key determination ranges 21 to 26 so that the barycentric position Pa is included in the key determination range 21 for determining the new character input. Thus, the CPU 3 can allow the user, having performed an input operation while falsely regarding the key input position P of the canceled character input as within the key determination range 21 for determining the new character input, to easily perform the input operation.

According to the first embodiment, the CPU 3 is configured to move the whole of the key determination ranges 21 to 26 and not to move the whole of the key display areas 11 to 16 of the software keyboard screen 10 when performing the first key determination range change processing based on the correction operation. Thus, the CPU 3 can allow the user, having performed the input operation on a position of the software keyboard screen 10 deviating in a prescribed direction as a whole, to easily perform the input operation on the whole of the character input by moving only the whole of key determination ranges 21 to 26 without moving the key display areas 11 to 16.

According to the first embodiment, the CPU 3 is configured to enlarge the key determination range 21 for determining the prescribed character input in the state of fixing the aspect ratio thereof and to reduce the key determination ranges 21 adjacent to the enlarged key determination range 21a when the input frequency of the prescribed character input reaches the prescribed level with respect to the number of times of the whole character inputs on the basis of the number (history) of times of the character inputs for the respective characters stored in the memory 4 and the number of times of the whole character inputs. Thus, the CPU 3 can allow the user to easily perform the prescribed character input having a high input frequency, whereby the same can suppress increase in the number of correction operations.

### (Second Embodiment)

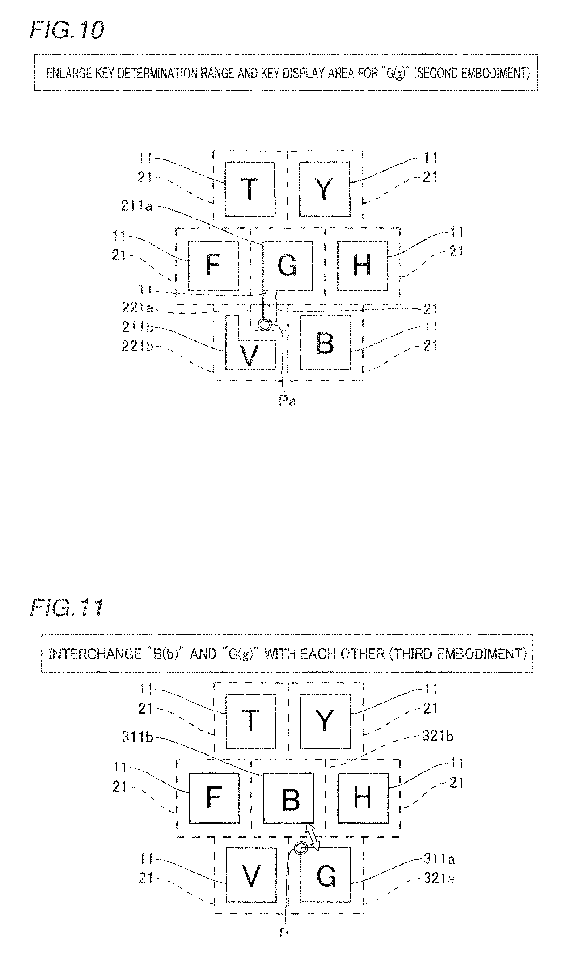

A second embodiment of the present invention is now described with reference to Figs. 1 and 10. According to the second embodiment, a CPU 3 enlarges a key determination range 21 for determining a new character input, dissimilarly to the CPU 3 in the aforementioned first embodiment moving the whole of the key determination ranges 21 to 26 in the first key determination range change processing based on the correction operation.

According to the second embodiment, the CPU 3 (see Fig. 1) determines whether or not a correction operation for the new character input resulting from a false determination of a canceled character input has been performed. When determining that the correction operation resulting from the false determination has been performed, the CPU 3 enlarges the key determination range 21 for determining the new character input (converts the same to an enlarged key determination range 221a) so that a barycentric position Pa is included in the key determination range 21 for determining the new character input and reduces a key determination range 21 for determining a canceled character input (converts the same to a reduced key determination range 221b) correspondingly to the enlarged key determination range 221a. The enlarged key determination range 221a and the reduced key determination range 221b are examples of the "key determination range" in the present invention.

At this time, the CPU 3 enlargedly displays the enlarged key display area 211a corresponding to the enlarged key determination range 221a and reducedly displays the reduced key display area 211b corresponding to the reduced key determination range 221b. The enlarged key display area 211a and the reduced key display area 211b are examples of the "key display area" in the present invention.

When changing a key determination range 21 for determining a character input "G(g)" on the basis of a history of a correction operation, for example, the CPU 3 enlarges an enlarged key determination range 221a for "G(g)" while extending a lower left portion thereof downward so that the barycentric position Pa is included in the key determination range 21 for "G(g)" and enlargedly displays the enlarged key display area 211a, if the barycentric position Pa is located on an upper right portion of a character key display area 11 corresponding to "V(v)". Consequently, the CPU 3 reduces a reduced key determination range 221b for "V(v)" correspondingly to the downward extension of the enlarged key determination range 221a for "G(g)", and also reducedly displays the reduced key display area 221b.

The CPU 3 is configured not to reduce the reduced key determination range 221b and the reduced key display area 211b to less than about 2/3 times of an unreduced key determination range 21 and an unreduced character key display area 11 respectively. Further, the CPU 3 is configured not to enlarge the enlarged key determination range 221a and the enlarged key display area 211a in excess of about twice an unenlarged key determination range 21 and an unenlarged key display area 11 respectively. The remaining structure and a control processing flow of the second embodiment of the present invention are similar to those of the aforementioned first embodiment.

According to the second embodiment, as hereinabove described, the CPU 3 is configured to enlarge the key determination range 21 for determining the new character input and to reduce the reduced key determination range 221b, adjacent to the enlarged key determination range 221a, for determining the canceled character input when determining that the correction operation resulting from the false determination has been performed. Thus, the CPU 3 can reduce the reduced key determination range 221b for determining the canceled character input having been falsely input at the time of the canceled character input while enlarging the enlarged key determination range 221a for determining the new character input having been unperformable at the time of the canceled character input, whereby the same can effectively allow the user to easily perform the input operation. Thus, the CPU 3 can suppress increase in the number of correction operations.

According to the second embodiment, as hereinabove described, the CPU 3 is configured to perform control of diminishing the rate of reducing the key determination range 21 for determining the canceled key input range below the rate of enlarging the key determination range 21 for determining the new character input when determining that the correction operation resulting from the false determination has been performed. Thus, the CPU 3 can prevent the key determination range 21 for determining the canceled character input from excess reduction (excess reduction of the reduced key determination range 221b), whereby the same can prevent the user from difficulty in the input operation for the canceled character input as well as from difficulty in visual recognition of the key display area 11 for the canceled character input (reduced key display area 211b).

According to the second embodiment, the CPU 3 enlargedly displays the enlarged key display area 211a to correspond to the enlarged key determination range 221a thereby not only enlarging the enlarged key determination range 221a for determining the new character input but also enlargedly displaying the enlarged key display area 211a corresponding to the new character input, whereby the same can more effectively allow the user to easily perform the input operation.

According to the second embodiment, the CPU 3 is configured to change the key determination range 21 for determining the new character input so that the key input position P (barycentric position Pa) detected at the time of the canceled character input is included in the key determination range 21 for determining the new character input and to change the key display area 11 for the new character input (to the enlarged key display area 211a) to correspond to the changed key determination range 21 for determining the new character input (the enlarged key determination range 221a) when determining that the correction operation resulting from the false determination has been performed. Thus, the user can visually recognize the change content of the key determination range 21 for determining the new character input (the enlarged key determination range 221a) by observing the enlarged key display area 211a. The remaining effects of the second embodiment of the present invention are similar to those of the aforementioned first embodiment.

### (Third Embodiment)

A third embodiment of the present invention is now described with reference to Figs. 1 and 11. According to the third embodiment, a CPU 3 interchanges a key determination range 321a and a character key display area 311a for a prescribed character input with a key determination range 321b and a character key display area 311b for another character input, dissimilarly to the CPU 3 according to the aforementioned first embodiment enlarging the key determination range 21 for determining the prescribed character input in the second key determination range change processing based on the input frequency.

According to the third embodiment of the present invention, the CPU 3 (see Fig. 1) is configured to change partial arrangement of the key determination range 21 and partial arrangement of the corresponding character key display area 11 by interchanging the key determination range 321a and the character key display area 311a for the prescribed character input with the key determination range 321b and the character key display area 311b for another character input when an input frequency of the prescribed character input reaches a prescribed level, as shown in Fig. 11.

When the input frequency of a character input "B(b)" reaches the prescribed level, for example, the CPU 3 interchanges a key determination range 321a and a character key display area 311a for the character input "B(b)" with a key determination range 321b and a character key display area 311b for a character input "G(g)" closer to the center of a software keyboard screen 10 than "B(b)". The remaining structure and a control processing flow of the third embodiment of the present invention are similar to those of the aforementioned first embodiment.

According to the third embodiment, as hereinabove described, the CPU 3 is configured to change partial arrangement of the key determination range 21 and partial arrangement of the corresponding character key display area 11 by interchanging the key determination range 321a and the character key display area 311a for the prescribed character input with the key determination range 321b and the character key display area 311b for another character input when the input frequency of the prescribed character input reaches the prescribed level. Thus, the CPU 3 can change the arrangement of the key determination range 21 so that the key determination range 321a for determining the prescribed character input having a high input frequency is located on a position allowing the user to more easily perform an input operation, whereby the same can prevent the user from making further input errors in the character input having a high input frequency. Consequently, the CPU 3 can suppress increase in the number of correction operations.

According to the third embodiment, as hereinabove described, the CPU 3 is configured to interchange the key determination range 321a and the key display area 311a for determining the prescribed key input with the key determination range 321b and the key display area 311b for determining another key input different from the prescribed key input when the input frequency of the prescribed key input reaches the prescribed level. Thus, the CPU 3 can interchange the key determination range 321a and the key display area 311a for determining the prescribed key input having a high input frequency with the key determination range 321b and the key display area 311b for determining another key input different from the prescribed key input so that the key determination range 321a for determining the prescribed character input having a high input frequency is located on a position allowing the user to more easily perform the input operation. Consequently, the CPU 3 can further suppress increase in the number of correction operations. The remaining effects of the third embodiment of the present invention are similar to those of the aforementioned first embodiment.

Although the present invention has been described and illustrated in detail, it is clearly understood that the same is by way of illustration and example only and is not to be taken by way of limitation, the spirit and scope of the present invention being limited only by the terms of the appended claims.

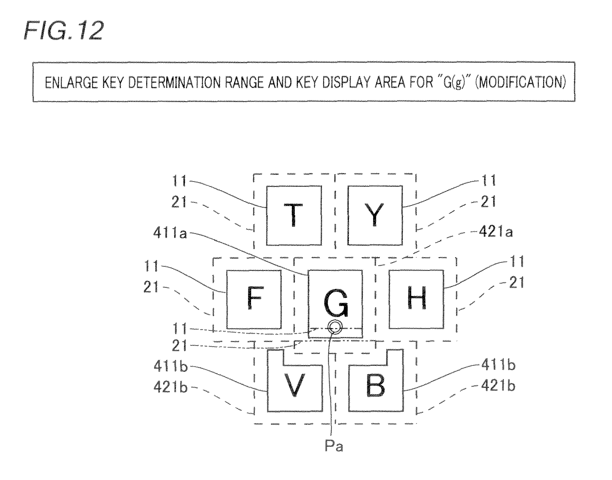

For example, while the CPU 3 enlarges the key determination range 21 for determining the prescribed character input in the state of fixing the aspect ratio thereof when performing the second key determination range change processing based on the input frequency in the aforementioned first embodiment, the present invention is not restricted to this. A CPU may alternatively be configured to enlarge an enlarged key determination range 421a for determining a prescribed character input ("G(g)" in Fig. 12) to extend toward one side (downward in Fig. 12, toward "V(v)" and "B(b)") in the vertical direction and not to enlarge the same toward another side (upward in Fig. 12, toward "T(t)" and "Y(y)") in the vertical direction and in lateral directions (toward "F(f)" and "H(h)" in Fig. 12), as in a modification of the first embodiment shown in Fig. 12, for example.

In this case, the CPU preferably enlarges the enlarged key determination range 421a while extending a side where a barycentric position Pa is located with respect to a center of an unenlarged key determination range 21. Further, the CPU preferably reduces reduced key determination ranges 421b ("V(v)" and "B(b)" in Fig. 12) correspondingly to the enlarged key determination range 421a. In addition, the CPU preferably enlargedly displays an enlarged key display area 411a corresponding to the enlarged key determination range 421a and reducedly displays reduced key display areas 411b corresponding to the reduced key determination ranges 421b. The enlarged key determination range 421a and the reduced key determination ranges 421b are examples of the "key determination range" in the present invention, and the enlarged key display area 411a and the reduced key display areas 411b are examples of the "key display area" in the present invention.

While the CPU performs both of the first key determination change processing of changing the key determination range on the basis of the correction operation and the second key determination change processing of changing the key determination range on the basis of the input frequency in the aforementioned first embodiment, the present invention is not restricted to this. According to the present invention, the CPU may alternatively be configured to perform either the first key determination change processing based on the correction operation or the second key determination change processing based on the input frequency.

While the CPU 3 moves the whole of the key determination ranges 21 to 26 including the key determination range 21 for determining the new character input so that the barycentric position Pa is included in the key determination range 21 for determining the new character input in the aforementioned first embodiment and the CPU 3 enlarges the enlarged key determination range 221a for determining the new character input so that the barycentric position Pa is included in the enlarged key determination range 221a for determining the new character input in the aforementioned second embodiment, the present invention is not restricted to this. According to the present invention, the barycentric position Pa may not be included in the key determination range for determining the new character input. In this case, the CPU preferably changes the key determination range for determining the new character input to be positioned in the vicinity of the barycentric position Pa. Alternatively, the CPU may change the key determination range for determining the new character input so that not the barycentric position Pa but the newest key input position P, for example, is included in the key determination range for determining the new character input.

While the CPU 3 determines that the prescribed character input has been canceled when the user has made an input operation on the key determination range 23 corresponding to the delete key display area 13 or the key determination range 24 corresponding to the backspace key display area 14 in each of the aforementioned first to third embodiments, the present invention is not restricted to this. According to the present invention, the CPU 3 may alternatively determine that the user has canceled the prescribed character input through another operation. For example, the CPU 3 may determine that the user has canceled the prescribed character input by overwriting the same or collectively canceling a plurality of selected characters.

While the CPU 3 moves the whole of the key determination ranges 21 to 26 including the key determination range 21 for determining the new character input in the aforementioned first embodiment, the present invention is not restricted to this. According to the present invention, the CPU 3 may alternatively move only the key determination range for determining the new character input and key determination ranges in the periphery thereof without moving the whole of the key determination ranges.

While the CPU 3 determines that the correction operation for the new character input resulting from the false determination of the canceled character input has been performed when the key determination range 21 for determining the canceled character input and the key determination range 21 for determining the new character input are adjacent to each other in each of the aforementioned first and second embodiments, the present invention is not restricted to this. According to the present invention, the CPU 3 may alternatively be configured to determine that the correction operation resulting from the false determination has been performed also when the key determination range 21 for determining the canceled character input and the key determination range 21 for determining the new character input are separated from each other.

While the CPU 3 interchanges the key determination range 321a and the character key display area 311a for the prescribed character input with the key determination range 321b and the character key display area 311b for another character input in the second key determination range change processing based on the input frequency in the aforementioned third embodiment, the present invention is not restricted to this. According to the present invention, the CPU may alternatively be configured to interchange the key determination range and the character key display area for the prescribed character input with the key determination range and the character key display area for another character input in the first key determination range change processing based on the correction operation.

While the character input is employed as an example of the key input in each of the aforementioned first to third embodiments, the present invention is not restricted to this. The key input in the present invention may alternatively be an input for ascertaining a character input (input of the return key) or an input (input of the delete key or the backspace key) for canceling a character input (input of the delete key or the backspace key). When the software keyboard screen displays an icon for starting an application, for example, the key input in the present invention may be an input of the icon for starting the application.

While the portable electronic apparatus 100 is employed as an example of the electronic apparatus having a software keyboard function in each of the aforementioned first to third embodiments, the present invention is not restricted to this. The present invention is not restricted to the portable electronic apparatus, but the structure of the present invention may be applied to another electronic apparatus having a software keyboard function such as an ATM (automated teller machine) including a display portion capable of displaying a software keyboard screen and a touch panel or a projector capable of projecting a software keyboard screen.

While the processing of the CPU 3 is described with reference to the flow chart of a flow-driven type successively performing processing along the processing flow in the aforementioned first embodiment for the convenience of illustration, the present invention is not restricted to this. According to the present invention, the CPU 3 may alternatively perform event-driven processing every event. In this case, the CPU 3 may perform complete event-driven processing, or a combination of event-driven processing and flow-driven processing.

## Claims

1. An electronic apparatus (100) having a software keyboard function, comprising:
a display portion (1) capable of displaying a software keyboard screen (10) including a key display area (11, 11a, 11b, 12-16, 211a, 211b, 311a, 311b, 411a, 411b);
a detection portion (2) capable of detecting a key input position (P) of an input operation performed by the user on the basis of the displayed key display area; and
a control portion (3) recognizing that a prescribed key input has been performed on the basis of a prescribed key determination range (21, 21a, 21b, 22-26, 221a, 221b, 321a, 321b, 421a, 421b) where the key input position detected by the detection portion is located, wherein
the control portion is configured to perform control of changing the key determination range on the basis of at least either a correction operation performed on the prescribed key input or an input frequency of the prescribed key input.

2. The electronic apparatus having a software keyboard function according to claim 1, wherein
the control portion is configured to perform the control of changing the key determination range on the basis of at least either a history of the correction operation performed on the prescribed key input or an input frequency acquired through a history of the prescribed key input.

3. The electronic apparatus having a software keyboard function according to claim 1 or 2, wherein
the key input is a character input, and
the control portion is configured to determine whether or not a correction operation for a second character input resulting from a false determination of a first character input has been performed by determining whether or not the input operation performed by the user at the time of the first character input has intended not the first character input but the second character input when the user has canceled the first character input after performing the first character input and then performed the second character input substituting for the first character input, and
configured to perform control of at least changing a key determination range for determining the second character input when determining that the correction operation resulting from the false determination has been performed.

4. The electronic apparatus having a software keyboard function according to claim 3, wherein
the control portion is configured to determine that the correction operation resulting from the false determination has been performed when a key determination range for determining the first character input and the key determination range for determining the second character input are adjacent to each other.

5. The electronic apparatus having a software keyboard function according to claim 4, wherein
the control portion is configured to determine that the correction operation resulting from the false determination has been performed when the user has canceled a first character input of at least two English characters after performing the first character input of at least two English characters and the key determination range for determining the first character input and the key determination range for determining the second character input are adjacent to each other.

6. The electronic apparatus having a software keyboard function according to any of claims 3 to 5, wherein
the control portion is configured to perform control of changing the key determination range for determining the second character input on the basis of the key input position detected at the time of the first character input by a prescribed plural number of times when the number of times of determining that the correction operation resulting from the false determination has been performed reaches the prescribed plural number of times on the basis of a history of a correction operation performed on the first key input.

7. The electronic apparatus having a software keyboard function according to any of claims 3 to 6, wherein
the control portion is configured to perform control of changing the key determination range for determining the second character input so that the key input position detected at the time of the first character input is included in the key determination range for determining the second character input when determining that the correction operation resulting from the false determination has been performed.

8. The electronic apparatus having a software keyboard function according to claim 7, wherein
the control portion is configured to perform control of changing the key determination range for determining the second character input so that the key input position detected at the time of the first character input is included in the key determination range for determining the second character input and to change a key display area for the second key input to correspond to the changed key determination range for determining the second character input when determining that the correction operation resulting from the false determination has been performed.

9. The electronic apparatus having a software keyboard function according to any of claims 3 to 7, wherein
the control portion is configured to perform control of moving the whole of a plurality of key determination ranges and not to move a plurality of key display areas of the software keyboard screen when determining that the correction operation resulting from the false determination has been performed.

10. The electronic apparatus having a software keyboard function according to any of claims 3 to 8, wherein
the control portion is configured to perform control of enlarging the key determination range for determining the second character input while reducing a key determination range for determining the first key input when determining that the correction operation resulting from the false determination has been performed.

11. The electronic apparatus having a software keyboard function according to claim 10, wherein
the control portion is configured to perform the control of enlarging the key determination range for determining the second character input while enlargedly displaying a key display area of the software keyboard screen corresponding to the second character input to correspond to the enlarged key determination range for determining the second character input.

12. The electronic apparatus having a software keyboard function according to claim 10 or 11, wherein
the control portion is configured to perform control of diminishing the rate of reducing the key determination range for determining the first key input range below the rate of enlarging the key determination range for determining the second character input when determining that the correction operation resulting from the false determination has been performed.

13. The electronic apparatus having a software keyboard function according to any of claims 1 to 12, wherein
the control portion is configured to perform control of enlarging a key determination range for determining the prescribed key input or changing the arrangement of the key determination range when the input frequency of the prescribed key input reaches a prescribed level.

14. The electronic apparatus having a software keyboard function according to claim 13, wherein
the control portion is configured to perform control of interchanging the key determination range and a key display area for determining the prescribed key input with a key determination range and a key display area for determining another key input different from the prescribed key input when the input frequency of the prescribed key input reaches the prescribed level.

15. A method of controlling an electronic apparatus (100) having a software keyboard function and comprising a display portion (1) capable of displaying a software keyboard screen (10) including a key display area (11, 11a, 11b, 12-16, 211a, 211b, 311a, 311b, 411a, 411b) and a detection portion (2) capable of detecting a key input position (P) of an input operation performed by the user on the basis of the displayed key display area, comprising steps of:
recognizing that a prescribed key input has been performed on the basis of a prescribed key determination range (21, 21a, 21b, 22-26, 221a, 221b, 321a, 321b, 421a, 421b) where the key input position detected by the detection portion is located; and
changing the key determination range on the basis of at least either a correction operation performed on the prescribed key input or an input frequency of the prescribed key input.
